# NEUE EUROPÄISCHE PATENTSCHRIFT

(11) **EP 2 344 825 B2**
(45) Veröffentlichungstag und Bekanntmachung des Hinweises auf die Entscheidung über den Einspruch: **26.08.2020**
(45) Hinweis auf die Patenterteilung: 29.05.2013
(21) Anmeldenummer: 09781767.0
(22) Anmeldetag: 12.08.2009
(51) Int. Cl.: F27B 1/00, F27D 17/00, C04B 7/44

(54) **VERFAHREN UND SCHACHTOFEN ZUM BRENNEN VON STÜCKIGEM MATERIAL**
METHOD AND SHAFT FURNACE FOR FIRING MATERIAL PIECES
PROCÉDÉ ET FOUR À CUVE POUR LA COMBUSTION DE MATÉRIAUX EN MORCEAUX

(30) Priorität: 25.08.2008 DE 102008039545
(43) Veröffentlichungstag der Anmeldung: 20.07.2011
(73) Patentinhaber: thyssenkrupp Industrial Solutions AG, 45143 Essen (DE)
(72) Erfinder: BEYER, Christoph, 48147 Münster (DE); SCHEFER, Dirk, 59320 Ennigerloh (DE)
(74) Vertreter: Tetzner, Michael
(86) Internationale Anmeldenummer: PCT/EP2009/060454
(87) Internationale Veröffentlichungsnummer: WO 2010/023105

(56) Entgegenhaltungen:
- KR-A- 20030 079 666
- US-A1- 2008 032 247

## Beschreibung

Die Erfindung betrifft ein Verfahren sowie einen Schachtofen zum Brennen von stückigem Material.

Aus der DE 32 09 836 C2 ist ein Verfahren zur Herstellung von Sinterdolomit in einem Schachtofen bekannt. Ein aus zwei im Gleich- und Gegenstrom betriebenen Schächten bestehender Schachtofen ist ferner der AT 248 941 B zu entnehmen.

Bei der Zementherstellung wird zur Reduzierung des NOₓ-Gehaltes in den Abgasen das so genannte SNCR-Verfahren eingesetzt. Dabei wird der NOₓ-Anteil im Abgas durch Eindüsung von ammoniakhaltiger Flüssigkeit im Drehrohrofen oder im Calcinator gesenkt (KR 2003 0079666 A). Für die SNCR-Reaktion liegt das optimale Temperaturfenster in einem Bereich von 850°C-1150°C.

In der US 2008/0032247 wird weiterhin die Eindüsung eines Mittels zur Schadstoffininderung in einen Schachtofen beschrieben. Dort wird vorgeschlagen, das ammoniakhaltige Mittel in Form eines trockenen Pulvers in einen Bereich zwischen der Vorwärmzone und der Calcinierzone in das Materialbett einzubringen. In diesem Bereich herrschen zwar die für das SNCR-Verfahren optimalen Temperaturen, jedoch ist die Verteilung des Schadstoff mindernden Mittels in der Materialschicht relativ schwierig. Aus diesem Grunde ist auch der Wirkungsgrad nicht befriedigend und wird den Anforderungen aktueller und zukünftiger Emissionsgrenzwerte eventuell nicht gerecht.

Aus der EP 1 930 303 A1 ist ein Verfahren zur thermischen Behandlung von Rohstoff, insbesondere von Zementrohmehl, Kalkstein, Dolomit oder Magnesit in einem Schachtofen bekannt. Die Reduktion der entstehenden Stickoxide erfolgt insbesondere durch den Ammoniakgehalt des als Brennstoff verwendeten Rohbiogases. Erforderlichenfalls kann weiterer Ammoniak als Reduktionsmittel zugegeben werden, wobei die Stickoxidreduktion in der eigentlichen Reaktionszone oder aber in einer der Reaktions- bzw. Brennzone nachgeschalteten Entstickungszone erfolgen kann.

Der Erfindung liegt daher die Aufgabe zugrunde, die NOₓ-Minderung in einem Schachtofen zu vereinfachen und den Wirkungsgrad zu verbessern.

Erfmdungsgemäß wird diese Aufgabe durch die Merkmale der Ansprüche 1 und 11 gelöst.

Beim erfindungsgemäßen Verfahren zum Brennen von stückigem Material in einem Schachtofen bildet sich im Schachtofen ein Materialbett mit einer Materialbettoberfläche aus und in einer Brennzone wird über wenigstens eine Brennerlanze Brennstoff zugeführt, wobei der entstehende Abgasstrom schadstoffbelastet ist. Der Schachtofen wird so betrieben, dass sich eine Materialbett-Oberflächentemperatur von 900°C-1100°C einstellt und ein Mittel zur NOₓ-Minderung oberhalb der Materialbettoberfläche zugegeben wird.

Beim üblichen Betrieb eines Schachtofens mit Vorwärmzone, Calcinier- und oder Sinterzone und Kühlzone liegt die Materialbettoberflächentemperatur in einem Bereich von weniger als 800°C, d.h. in einem Temperaturbereich, der für das SNCR-Verfahren als ungünstig angesehen wird.

Erfindungsgemäß wird daher vorgeschlagen, den Schachtofen so zu betreiben, dass sich eine Materialbett-Oberflächentemperatur von 900°C-1100°C einstellt. Mit anderen Worten: Die Materialbett-Oberflächentemperatur wird bis in den für das SNCR-Verfahren optimalen Temperaturbereich angehoben, sodass das Mittelzur NOₓ-Minderung oberhalb der Materialbettoberfläche, insbesondere kurz oberhalb der Materialbettoberfläche dazu gegeben werden kann. Dadurch, dass sich in diesem Bereich kein Material befindet, kann eine gute Verteilung des Mittels zur NOₓ-Minderung erreicht werden. Auch die Einrichtung zum Einbringen des Mittels, wie beispielsweise Düsen oder Lanzen, kann einfacher ausgebildet werden, da sie nicht mit dem zu brennenden Material in Kontakt kommt und somit nicht relevant mechanisch belastet wird.

Weitere Ausgestaltungen der Erfindung sind Gegenstand der Unteransprüche.

Als Mittel zur NOₓ-Minderung kommt vorzugsweise eine Flüssigkeit zur Anwendung, die sich gut verteilen lässt und eine schnelle Reaktion mit dem NOₓ ermöglicht.

Das zu brennende Material wird von oben in den Schachtofen aufgegeben und im unteren Bereich über ein Austragssystem ausgetragen. Der Austrag wird dabei so gesteuert, dass die Materialbettoberfläche immer unterhalb der Zugabestelle des Mittels zur NOₓ-Minderung liegt.

Die für die Verbrennung erforderliche Verbrennungsluft wird zum einen durch Primärluft gebildet, die in die Brennzone über die Brennerlanze, zugeführt wird und besteht zum anderen aus Sekundärluft, die im unteren Bereich des Schachtofens zugeführt und somit vorgewärmt wird. Vorzugsweise beträgt die Temperatur in der Brennzone zwischen 1500°C und 2200°C.

Des Weiteren kann vorgesehen werden, dass die Materialbett-Oberflächentemperatur überwacht wird, wobei in Abhängigkeit der Temperatur die Randbedingungen im Schachtofen so geregelt werden, dass sich eine Materialoberflächentemperatur im Bereich von 900°C-1100°C einstellt.

Die Menge des zuzugebenden Mittels zur NOₓ-Minderung hängt primär von der Schadstoffbelastung des Abgasstromes ab und kann durch einen geeigneten Regelkreis geregelt werden.

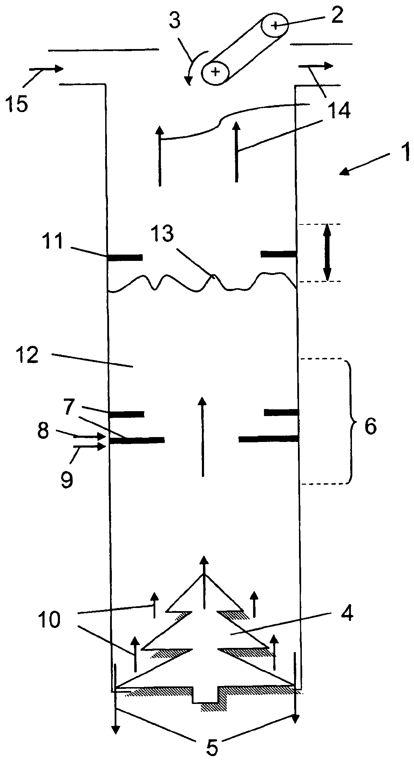

Vorteile und Ausgestaltungen der Erfindung werden im Folgenden anhand der Beschreibung und der Zeichnung näher erläutert.

In der Zeichnung ist eine schematische Ansicht des Schachtofens dargestellt.

Der dargestellte Schachtofen 1 weist im oberen Bereich eine Aufgabeeinrichtung 2 zum Zuführen von Frischgut 3 des zu brennenden, stückigen Materials und im unteren Bereich ein Austragssystem 4 zum Austragen des gebrannten Materials 5 auf. Weiterhin ist eine Brennzone 6 vorgesehen, in der wenigstens eine, vorzugsweise jedoch mehrere Brennerlanzen 7 vorgesehen, die vorzugsweise in mehreren Ebenen angeordnet sind. Über die Brennerlanzen wird Brennstoff 8 und Primärluft 9 zugeführt..

Weiterhin wird im unteren Bereich des Schachtofens, vorzugsweise über das Austragssystem 4, Sekundärluft 10 zugeführt, die das Materialbett bis zur Brennzone 6 durchströmt und sich dabei erwärmt.. Durch Einstellen des Verhältnisses von Sekundärluft zur Primärluft kann die Temperatur in der Brennzone vorzugsweise zwischen 1500°C und 2200°C eingestellt werden. Um diese Temperaturen zu erreichen, wird vorzugsweise mehr Sekundärluft als Primärluft verwendet.

Im Betrieb bildet sich im Schachtofen ein Materialbett 12 aus, wobei die Höhe der Materialbettoberfläche 13 durch die Menge des zugeführten Frischgutes 3 und die Menge des abgezogenen gebrannten Materials 5 bestimmt wird. Zwischen der Materialbettoberfläche 13 und der Aufgabeeinrichtung 2 verbleibt ein freier Raum, in dem das Frischgut 3 nach unten fällt und das Abgas 14 aus dem Materialbett nach oben abgeführt wird.

In diesem Bereich ist außerdem eine Einrichtung 11 zur Zugabe eines Mittels zur NOₓ-Minderung vorgesehen. Diese Einrichtung 11 könnte beispielsweise durch Flüssigkeitslanzen gebildet werden. Das Mittel zur NOₓ-Minderung weist vorzugsweise wenigstens Bestandteile von Ammoniak und/oder Harnstoff auf. Die Einrichtung 11 zur Zugabe des Mittels zur NOₓ-Minderung ist somit oberhalb der Materialbettoberfläche, also in dem Bereich zwischen Materialbettoberfläche und Aufgabeeinrichtung 2, angeordnet. Auf diese Weise lässt sich das Mittel zur NOₓ-Minderung auf einfache Weise relativ gleichmäßig über die Materialbettoberfläche 13 verteilen und in den Abgasstrom einbringen

Die Einrichtung 11 zur Einbringung des Mittels zur NOₓ-Minderung ist relativ knapp oberhalb der Materialoberfläche, in jedem Fall in der Hälfte, vorzugsweise im ersten Viertel des Bereichs zwischen Materialbettoberfläche und Aufgabeeinrichtung 2, angeordnet.

Während des Betriebes wird die Aufgabeeinrichtung 2 und das Austragssystem 4 so gesteuert, dass die Einrichtung 11 zur Zugabe des Mittels zur NOₓ-Minderung zu jeder Zeit oberhalb der sich ausbildenden Materialbettoberfläche 13 vorgesehen ist.

Im oberen Bereich des Schachtofens 1 kann weiterhin ein Kühlmedium 15 zugeführt werden, um die Temperatur des Abgases 14 zu senken.

Durch die Erhöhung der Materialbett-Oberflächentemperatur in einen Bereich von 900°C-1100°C und die Zugabe des Mittels zur NOₓ-Minderung oberhalb der Materialbettoberfläche, d.h. in einem Bereich außerhalb des Materialbettes, kann auf einfache Art und Weise eine gute Verteilung des Mittels und damit ein hoher Wirkungsgrad bei der Schadstoffminderung erreicht werden.

## Patentansprüche

1. Verfahren zum Brennen von stückigem Material in einem Schachtofen (1), wobei sich im Schachtofen ein Materialbett (12) mit einer Materialbettoberfläche (13) ausbildet und in einer Brennzone (6) über wenigstens eine Brennerlanze Brennstoff (8) zugeführt wird, wobei ein entstehender Abgasstrom schadstoffbelastet ist und ferner ein Mittel zur NOₓ-Minderung in den Schachtofen eingebracht wird,
**dadurch gekennzeichnet, dass** der Schachtofen so betrieben wird, dass sich eine Materialbett-Oberflächentemperatur von 900°C-1100°C einstellt und das Mittel zur NOₓ-Minderung oberhalb der Materialbettoberfläche zugegeben wird.

2. Verfahren nach Anspruch 1, **dadurch gekennzeichnet, dass** als Mittel zur NOₓ-Minderung eine Flüssigkeit zur Anwendung kommt.

3. Verfahren nach Anspruch 1, **dadurch gekennzeichnet, dass** weiterhin ein Austragssystem (4) vorgesehen ist, mit dem das gebrannte Material aus dem Schachtofen (1) ausgetragen wird, wobei der Austrag so gesteuert wird, dass die Materialbettoberfläche (13) immer unterhalb der Zugabestelle des Mittels zur NOₓ-Minderung liegt.

4. Verfahren nach Anspruch 1, **dadurch gekennzeichnet, dass** im unteren Bereich des Schachtofens (1) Sekundärluft (10) zugegeben wird und im oberen Bereich des Schachtofens ein im Schachtofen entstehendes Abgas (14) abgeführt wird.

5. Verfahren nach Anspruch 4, **dadurch gekennzeichnet, dass** in der Brennzone (6) Primärluft (9) zugeführt wird, wobei der Anteil an Sekundärluft (10) größer ist als der der Primärluft (9).

6. Verfahren nach Anspruch 1, **dadurch gekennzeichnet, dass** oberhalb der Zugabestelle des Mittels zur NOₓ-Minderung ein Kühlmedium (15) zugeführt wird, welches die Abgastemperatur senkt.

7. Verfahren nach Anspruch 1, **dadurch gekennzeichnet, dass** die Menge des in den Schachtofen (1) eingedüsten Mittels zur NOₓ-Minderung in Abhängigkeit der Schadstoffbelastung eines Abgasstroms aus der Brennzone (6) geregelt wird.

8. Verfahren nach Anspruch 1, **dadurch gekennzeichnet, dass** das Mittel zur NOₓ-Minderung wenigstens Bestandteile von Ammoniak und/oder Harnstoff aufweist.

9. Verfahren nach Anspruch 1, **dadurch gekennzeichnet, dass** die Temperatur in der Brennzone (6) zwischen 1200°C und 2400°C beträgt.

10. Verfahren nach Anspruch 1, **dadurch gekennzeichnet, dass** die Materialbett-Oberflächentemperatur überwacht wird.

11. Schachtofen (1) zur Durchführung des Verfahren nach einem oder mehreren der vorhergehenden Ansprüche, mit
a. einer im oberen Bereich angeordneten Aufgabeeinrichtung (2) zum Zuführen von Frischgut (3),
b. einer wenigstens eine Brennerlanze (7) aufweisenden Brennzone (6),
c. einem im unteren Bereich angeordneten Austragssystem (4) zum Abziehen von gebranntem Material (5) und
d. einer Einrichtung (11) zur Zugabe eines Mittels zur NOₓ-Minderung, wobei zwischen einer sich im Betrieb ausbildenden Materialbettoberfläche (13) und der Aufgabeeinrichtung (2) zum Zuführen von Frischgut (3) ein freier Raum verbleibt,
**dadurch gekennzeichnet, dass** die Einrichtung (11) zur Zugabe des Mittels zur NOₓ-Minderung im Bereich des freien Raums oberhalb der sich im Betrieb ausbildenden Materialbettoberfläche (13) angeordnet ist.

## Claims

1. Method for burning lump-form material in a shaft kiln (1), a material bed (12) having a material bed surface (13) being formed in the shaft kiln and fuel (8) being supplied to a burning zone (6) by way of at least one burner lance, a resultant exhaust gas stream being pollutant-laden and a NOₓ-reducing agent also being introduced into the shaft kiln,
**characterised in that** the shaft kiln is operated in such a manner that a material bed surface temperature of 900°C-1100°C is set and the NOₓ-reducing agent is added above the material bed surface.

2. Method according to claim 1, **characterised in that** a fluid is used as the NOₓ-reducing agent.

3. Method according to claim 1, **characterised in that** there is also provided a discharge system (4) by means of which the burnt material is discharged from the shaft kiln (1), the discharge being controlled in such a manner that the material bed surface (13) always lies below the site where the NOₓ-reducing agent is added.

4. Method according to claim 1, **characterised in that** secondary air (10) is added to the lower region of the shaft kiln (1) and exhaust gas (14) occurring in the shaft kiln is conveyed away from the upper region of the shaft kiln.

5. Method according to claim 4, **characterised in that** primary air (9) is supplied to the burning zone (6), the proportion of secondary air (10) being larger than that of the primary air (9).

6. Method according to claim 1, **characterised in that** a cooling medium (15) which lowers the exhaust gas temperature is supplied above the site where the NOₓ-reducing agent is added.

7. Method according to claim 1, **characterised in that** the amount of NOₓ-reducing agent injected through nozzles into the shaft kiln (1) is regulated in dependence on the pollutant burden of an exhaust gas stream from the burning zone (6).

8. Method according to claim 1, **characterised in that** the NOₓ-reducing agent comprises at least constituents of ammonia and/or urea.

9. Method according to claim 1, **characterised in that** the temperature in the burning zone (6) is from 1200°C to 2400°C.

10. Method according to claim 1, **characterised in that** the material bed surface temperature is monitored.

11. Shaft kiln (1) for performing the method according to one or more of the preceding claims, with
a. a feed device (2) arranged in an upper region for supplying fresh stock (3),
b. a burning zone (6) having at least one burner lance (7),
c. a discharge system (4) arranged in a lower region for discharging the burnt material (5) and
d. an equipment (11) for adding a NOₓ-reducing agent,
wherein a free space for feeding fresh stock (3) remains between the material bed surface (13) being formed during operation and the feed device (2),
**characterised in that** the equipment (11) for adding the NOₓ-reducing agent is located in the region of the free space above the material bed surface (13) being formed during operation.

## Revendications

1. Procédé pour la calcination de matériau en morceaux dans un four à cuve (1), sachant que, dans le four à cuve, se forme un lit de matériau (12), qui présente une surface de lit de matériau (13) et que, dans une zone de combustion (6), un combustible (8) est amené par l'intermédiaire d'au moins une lance de combustion, un flux de gaz d'échappement en résultant étant de substances polluantes et un agent réducteur de NOₓ étant introduit dans le four à cuve,
**caractérisé en ce que** le four à cuve est exploité de telle sorte que l'on obtient une température superficielle du lit de matériau de 900 °C à 1100 °C, et que l'apport d'agent réducteur de NOₓ est effectué au-dessus de la surface du matériau.

2. Procédé selon la revendication 1, **caractérisé en ce que**, comme agent réducteur de NOₓ, on utilise un liquide.

3. Procédé selon la revendication 1, **caractérisé en ce que**, de plus, est prévu un système de décharge (4), au moyen duquel le matériau calciné est déchargé du four à cuve (1), sachant que le déchargement est commandé de sorte que la surface du matériau (13) soit toujours située au-dessous du point d'apport de l'agent réducteur de NOₓ.

4. Procédé selon la revendication 1, **caractérisé en ce que**, dans la région intérieure du four à cuve (1), est effectué un apport d'air secondaire (10) et que, dans la région supérieure du four à cuve, est évacué un gaz d'échappement (14) généré dans le four à cuve.

5. Procédé selon la revendication 4, **caractérisé en ce que** de l'air primaire (9) est amené dans la zone de combustion (6), sachant que la part d'air secondaire (10) est plus grande que celle d'air primaire (9).

6. Procédé selon la revendication 1, **caractérisé en ce que**, au-dessus du point d'apport de l'agent réducteur NOₓ, est introduit un agent réfrigérant (15), qui fait baisser la température des gaz d'échappement.

7. Procédé selon la revendication 1, **caractérisé en ce que** la quantité d'agent réducteur de NOₓ, injecté dans le four à cuve (1), est réglée en fonction de la pollution d'un flux de gaz d'échappement en provenance de la zone de combustion (6).

8. Procédé selon la revendication 1, **caractérisé en ce que** l'agent réducteur de NOₓ présente au moins des composants d'ammoniaque et / ou d'urée.

9. Procédé selon la revendication 1, **caractérisé en ce que** la température de la zone de combustion (6) est située entre 1200 °C et 2400 °C.

10. Procédé selon la revendication 1, **caractérisé en ce que** la température de la surface du lit de matériau est surveillée.

11. Four à cuve pour l'exécution du procédé selon l'une ou plusieurs des revendications précédentes, qui comprend :
a) un dispositif d'alimentation (2) disposé dans une partie supérieure pour l'amenée de matériau frais (3),
b) une zone de combustion (6), qui est dotée d'au moins une lance de combustion (7),
c) un système de décharge (4) disposé dans une partie inférieure pour l'extraction du matériau calciné (5),
d) un dispositif (11) pour l'apport d'un agent réducteur de NOₓ, sachant qu'un espace libre demeure entre une surface du lit de matériau (13), se formant en fonctionnement, et le dispositif d'alimentation (2) pour l'amenée du matériau frais,
**caractérisé en ce que** le dispositif (11) pour l'apport de l'agent réducteur de NOₓ est disposé, dans la région de l'espace libre, au-dessus de la surface du lit de matériau (13) se formant en fonctionnement.
